# EUROPÄISCHE PATENTANMELDUNG

(11) **EP 3 211 411 A1**
(43) Veröffentlichungstag der Anmeldung: **30.08.2017**
(21) Anmeldenummer: 16157123.7
(22) Anmeldetag: 24.02.2016
(51) Int. Cl.: G01N 27/414, G01N 27/416

(54) **ISFET-MESSSONDE UND MESSSCHALTUNG FÜR DIE ISFET-MESSSONDE UND VERFAHREN**

(71) Anmelder: Mettler-Toledo GmbH, 8606 Greifensee (CH)
(72) Erfinder: SCHNEIDER, Ingo Andreas, 6330 Cham (CH); HORN, Petr, 7317 Valens (CH)
(74) Vertreter: Mettler-Toledo

(57) **Zusammenfassung**

ISFET-Messsonde mit einem Gehäuse, in dem ein ISFET und eine Referenzelektrode derart angeordnet sind, dass die Gate-Elektrode des ISFET, die mit einer ionensensitiven Schicht beschichtet ist, und die Referenzelektrode in einen Messraum hineinragen in den ein Messmedium einführbar ist, dadurch gekennzeichnet, dass innerhalb des Gehäuses zusätzlich eine Hilfselektrode angeordnet und innerhalb des Messraums gehalten ist.

## Beschreibung

Die vorliegende Erfindung betrifft eine ISFET-Messsonde, eine Messschaltung für die ISFET-Messsonde und ein Verfahren, mittels denen der Zustand eines Diaphragmas einer Referenzelektrode einer pH-Messsonde bestimmt werden kann.

In Forschungslaboratorien und in verschiedenen Industriezweigen, wie in Bereichen der Chemie, der Lebensmittelindustrie, der Biotechnologie oder der Pharmazie werden Messelektroden/Messsonden zur Bestimmung des pH-Werts in einem Messmedium eingesetzt. Der pH-Wert eines Messmediums ist ein Indikator für den Zustand, den Geschmack oder die Qualität des Messmediums. In chemischen Prozessen wird der pH-Wert auch verwendet, um Herstellungsprozesse zu regeln.

Die pH-Messung wird nach dem Prinzip der potentiometrischen Messung ausgeführt. Die potentiometrische Messung besteht darin, eine Messelektrode (ISFET) und eine Referenzelektrode ins Messmedium einzutauchen, durch die Referenzelektrode ein definiertes Potential zum Messmedium anzulegen, und die Potenzialdifferenz zwischen der Referenzelektrode und der Messelektrode zu messen, um den pH Wert der Messlösung bestimmen zu können.

Referenzelektroden umfassen z.B. ein Gehäuse in dessen Inneren sich ein Referenzelektrolyt befindet, der über eine Überführung in Kontakt mit einem Messmedium steht. Die Überführung kann z.B. eine offene Überführung sein oder als poröses Diaphragma ausgestaltet sein. Die Überführung soll einerseits einen möglichst kleinen elektrischen Widerstand aufweisen und andererseits die Vermischung des Referenz- oder Brückenelektrolyten und des Messmediums aufhalten, was durch unterschiedliche Massnahmen zu erreichen versucht wird.

Das Diaphragma der Messsonde, das in direktem Kontakt mit dem zu messenden Messmedium steht, ist ein sehr empfindlicher Teil der Messsonde. Bekannt ist, dass das sogenannte Biofouling, also die Ab- und Anlagerung von Fremdstoffen bzw. Störsubstanzen auf der Diaphragma-Oberfläche, auftreten kann. Der Säuregehalt, der Fettanteil, und das Volumen des Messmediums (der Druck) sind Faktoren die den Betrieb und somit die Lebensdauer des Diaphragmas beeinträchtigen.

Wesentlich bei Referenzelektroden ist es, dass sie ein möglichst konstantes Referenzpotenzial abgeben. Dafür ist es nötig, dass das Diaphragma einen konstanten und möglichst kleinen elektrischen Widerstand aufweist. Es ist daher vorteilhaft, den Zustand des Diaphragmas regelmässig während des Betriebs zu prüfen, um zuverlässige Ionenkonzentrationsmessungen zu erhalten.

Bei pH-Glaselektroden werden dazu Diagnoseschaltungen eingesetzt, die den Zustand des Diaphragmas überwachen und Statusmeldungen abgeben, sodass der Benutzer die Messung abbrechen und den Sensor rechtzeitig austauschen kann.

Ein Nachteil von Glaselektroden ist, dass die existierenden Diagnoseschaltungen zusätzliche Bausteine erfordern. Dadurch wird Wärme produziert, was die Messresultate beeinträchtigt und Korrekturmassnahmen erfordert.

Glaselektroden haben den weiteren Nachteil, sehr zerbrechlich zu sein. Im Fall eines Bruchs würden die Glasbestandteile in das Prozessgut eindringen und somit eine Gefahr für den Konsumenten darstellen. Deswegen werden Glaselektroden in verschiedenen Bereichen, so z.B. in der Biopharmazie, der Lebensmittel- und Getränkebranche, üblicherweise nicht verwendet. Aufgrund der genannten Probleme ist der Einsatz von Glaselektroden in einigen industriellen Bereichen durch gesetzliche Vorschriften sogar untersagt.

Ionensensitive Feldeffekttransistoren (ISFET) sind zum Einsatz in diesen Industriebereichen besser geeignet als Glaselektroden, weil sie mechanisch sehr stabil und im Vergleich zu den Glaselektroden nahezu unzerbrechlich sind. Diese Eigenschaften begünstigen den Einsatz von ISFET-Sensoren in Bereichen, wie z.B. der Lebensmittelindustrie und der pharmazeutischen Industrie, in denen das Prozessgut besonders geschützt werden muss.

Die Bestimmung des pH-Werts eines Messmediums mittels einer Messsonde, die einen ISFET umfasst, erfolgt durch die Messung des Verhaltens des ISFET, der in der Messsonde derart angeordnet ist, dass dessen Gate, welches mit einer ionensensitiven Schicht beschichtet ist, das Messmedium kontaktieren kann. Die Messsonde weist zudem eine Referenzelektrode auf, die ebenfalls in das Messmedium eingetaucht wird und an der eine Vorspannung anliegt, die das elektrische Potential des Messmediums und somit den Arbeitspunkt des ISFET bestimmt. Gemäss der Nernst-Gleichung bildet sich in Abhängigkeit der Konzentration der Ionen im Messmedium ein Oberflächenpotential am Kontakt zwischen dem Messmedium und der ionensensitiven Schicht am Gate des ISFETs aus. Dieses Potential addiert sich zur konstant an die Referenzelektrode angelegten Vorspannung und beeinflusst somit die Raumladungszone zwischen Source und Drain.

Die herkömmliche Methode, den pH-Wert eines Messmediums mittels eines ISFETs zu messen, besteht darin, den Drain-Strom und das Drain-Potential konstant zu halten, und das Source-Potential zu messen. Alternativ kann die Vorspannung an der Referenzelektrode geändert und dadurch der Drain-Strom konstant gehalten werden. In diesem Fall ist die geregelte Vorspannung das Mass für die vorliegende Ionenkonzentration.

Messsonden mit einem ISFET weisen ein Diaphragma auf, das der Referenzelektrode den Zugang zum Messmedium erlaubt. Damit die Messung der Ionenkonzentration gültige Resultate liefert, muss sichergestellt werden, dass eine Änderung des Zustands des Diaphragmas aufgrund belastender Einflussfaktoren, wie Säure, Fett, und Druck, die Messung nicht beeinflusst.

Der Zustand des Diaphragmas kann mit der Messung seines Widerstands bestimmt werden. Bekannt sind Diagnoseverfahren für ISFET-Messsonden, bei denen die Messsonden aus dem Messmedium genommen werden muss, um den Zustand des Diaphragmas zu prüfen.

Der Erfindung liegt die Aufgabe zu Grunde, eine verbesserte ISFET-Messsonde, insbesondere eine pH Messsonde, sowie eine Messschaltung und ein Verfahren für diese Messsonde anzugeben, mittels der der Zustand der Messsonde bestimmt werden kann.

Insbesondere ist eine Diagnose-Schaltung zu schaffen, die eine in situ Diagnose ermöglicht, d.h. ohne dass die Messsonde aus der Messmedium entfernt werden soll, und während dem Betrieb den Zustand der Referenzelektrode prüft. Für zuverlässige Messergebnisse soll die Diagnose Schaltung nur wenige Bauelemente aufweisen und möglichst wenig Strom verbrauchen.

Diese Aufgabe wird mit einer ISFET-Messsonde nach Anspruch 1, einer Messschaltung nach Anspruch 2 und einem Verfahren nach Anspruch 9 gelöst.

Die erfindungsgemässe ISFET-Messsonde umfasst ein Gehäuse, in dem ein ISFET und eine Referenzelektrode derart angeordnet sind, dass die Gate-Elektrode des ISFET, die mit einer ionensensitiven Schicht beschichtet ist, und die Referenzelektrode in einen Messraum hineinragen, in den ein Messmedium einführbar ist. Innerhalb des Gehäuses ist zusätzlich eine Hilfselektrode angeordnet, welche zur Kontaktierung des Messmediums vorgesehen und innerhalb des Messraums gehalten ist.

Die Messschaltung dient dem Betrieb einer ISFET-Messsonde nach Anspruch 1 und erlaubt die Messung der Ionenkonzentration in einem Messmedium sowie die Diagnose der Messsonde, die eine in das Messmedium eintauchbare Referenzelektrode und eine in das Messmedium eintauchbare Hilfselektrode, sowie einen ISFET umfasst, dessen beschichtete Gate-Elektrode der Kontaktierung des Messmediums dient, an dessen Drain-Anschluss ein erstes Potential einer konstanten ersten Spannungsquelle anliegt, dessen Source-Anschluss an einem ersten Anschluss eines Messwiderstands anliegt, dessen zweiter Anschluss mit einem zweitem Potential der ersten Spannungsquelle verbunden ist. Die Messschaltung umfasst weiter einen Operationsverstärker, an dessen nicht-invertierendem Eingang eine einstellbare Steuerspannung anliegt, dessen invertierender Eingang mit dem ersten Anschluss des Messwiderstands verbunden ist, und dessen Ausgang mit der Referenzelektrode verbunden ist.

Erfindungsgemäss ist wenigstens ein steuerbarer Schalter vorgesehen, der zwischen einer Messposition, in der die Messung des Messmediums erfolgt, und wenigstens einer Diagnoseposition, in der die Diagnose der Messsonde erfolgt, umschaltbar ist. Die zusätzlich in das Messmedium eintauchbare Hilfselektrode ist über den Schalter in der Diagnoseposition mit einer Prüfspannung verbindbar, und in der Messposition von der Prüfspannung trennbar.

Eine an die Referenzelektrode angelegte Vorspannung oder Referenzspannung definiert das Potential des Messmediums. Ab einem gewissen Wert der Referenzspannung wechselt der ISFET in den leitenden Zustand und es resultiert ein Stromfluss zwischen Drain und Source. Die Referenzspannung wird in der Folge derart gewählt, dass der ISFET in einem linearen Arbeitsbereich betrieben werden kann.

In einer ersten Ausgestaltung der Messschaltung wird die Referenzspannung mittels eines Operationsverstärkers vorzugsweise derart geregelt, dass der Drain-Source Strom, der den Messwiderstand durchfliesst, konstant bleibt. Dazu wird dem nicht-invertierenden Eingang des Operationsverstärkers eine einstellbare Steuerspannung zugeführt, mittels der eine gewünschte Vorspannung oder Referenzspannung an der Referenzelektrode einstellbar ist. An dem vom Drain-Source Strom durchflossenen Messwiderstand wird eine Regelspannung abgenommen, die dem invertierenden Eingang des Operationsverstärkers zugeführt wird. Diese Ausgestaltung der Messschaltung hat den Vorteil, dass die Referenzspannung sich über einen weiten Bereich linear mit dem pH-Wert ändert und somit proportional zur Ionenkonzentration des Messmediums ist.

Die Hilfselektrode ist z.B. eine ORP (Oxidation-Reduction Potential) Elektrode. In der vorliegenden Erfindung dient die Hilfselektrode in der Diagnoseposition dazu, der Referenzelektrode einen Strompuls aufzuprägen. Aus dem Antwortsignal der Referenzelektrode und/oder dem Antwortsignal der Hilfselektrode kann ein Signal abgeleitet werden, das ein Mass für den Widerstand des an der Referenzelektrode angeordneten Diaphragmas ist.

Der Strompuls wird mittels einer konstanten Prüfspannung erzeugt, die gegebenenfalls über einen Lastwiderstand und einen Schalter an die Hilfselektrode angelegt wird. Dadurch fliesst ein Strom zwischen der Hilfselektrode und der Referenzelektrode, unabhängig von den Eigenschaften des ISFETs, der während der Diagnose vorzugsweise abgeschaltet wird. Die Messung des Stromes oder Stromverlaufs erlaubt es, den Widerstand bzw. die Leitungsfähigkeit der Referenzelektrode zu bestimmen. Da belastende Einflüsse den Widerstand des Diaphragmas verändern, kann anhand des erfindungsgemässen Verfahrens somit der Zustand der Referenzelektrode ermittelt werden.

Im Vergleich mit der herkömmlichen pH-Messschaltung erfordert die Schaltung zur Diagnose der Referenzelektrode zusätzlich lediglich eine Hilfselektrode, einen Lastwiderstand, einen Schalter und eine Spannungsquelle zur Abgabe der Prüfspannung. Diese Bauteile können vorteilhaft in die erfindungsgemässe Messschaltung integriert werden, sodass in der Folge nicht nur die Ionenkonzentration des Messmediums, sondern auch der Zustand der Referenzelektrode gemessen werden kann. Besonders vorteilhaft ist nun, dass die erfindungsgemässe erweiterte Messsonde nicht mehr aus dem Messmedium entfernt werden muss, um den Zustand der Referenzelektrode auszuwerten. Die Diagnose kann innerhalb einer kurzen Zeitspanne zwischen zwei Messperioden erfolgen, sodass der Betrieb der Messvorrichtung praktisch nicht beeinträchtigt wird.

Die Prüfspannung kann von verschiedenen Spannungsquellen bezogen werden. Zur Bereitstellung der Prüfspannung kann eine zusätzliche Spannungsquelle vorgesehen werden. Da der ISFET während der Diagnose der Referenzelektrode nicht benötigt wird, kann alternativ ein Potential der Betriebsspannung, z.B. am Drain-Anschluss anliegende Potential während der Diagnose als Prüfspannung verwendet werden. Ferner kann die am nicht-invertierenden Eingang des Operationsverstärkers anliegende konstante Steuerspannung als Prüfspannung verwendet werden. Da die Spannungsdifferenz zwischen dem nicht-invertierende Eingang und dem invertierenden Eingang des Operationsverstärkers nach Null ist, kann die konstante Steuerspannung auch am invertierenden Eingang des Operationsverstärkers abgenommen werden.

Die Prüfspannung kann durch Umschaltung eines Schalters, z.B. eines zwei- oder mehrpoligen Schalters in einfacher Weise von einer der genannten Spannungsquellen an die Hilfselektrode angelegt werden.

Die Verwendung nur einer Spannungsquelle für mehrere Aufgaben, z.B. alternierend für den Betrieb des ISFETs und die Abgabe der Prüfspannung, hat den Vorteil, dass die Messschaltung einfacher und kostengünstiger aufgebaut werden kann und weniger Bausteine benötigt werden, die störende Verlustwärme erzeugen. In solchen Fällen kann beim Umschalten der Spannungsquelle der Drain- oder der Source-Anschluss vom Rest der Schaltung getrennt werden. Dies hat den Vorteil, den ISFET während der Diagnose nicht zu belasten.

Das Verfahren nach Anspruch 9 dient der Messung der Ionenkonzentration in einem Messmedium und zur Diagnose einer Messsonde nach Anspruch 1, die eine in das Messmedium eintauchbare Referenzelektrode, eine in das Messmedium eintauchbare Hilfselektrode und einen ISFET umfasst, dessen beschichtete Gate-Elektrode zur Kontaktierung des Messmediums vorgesehen ist, an dessen Drain-Anschluss ein erstes Potential der Betriebsspannung anliegt, dessen Source-Anschluss an einem ersten Anschluss eines Messwiderstands anliegt, dessen zweiter Anschluss mit einem zweiten Potential der Betriebsspannung verbunden ist, und mit einem Operationsverstärker, an dessen nicht-invertierendem Eingang eine einstellbare Steuerspannung anliegt, dessen invertierender Eingang mit dem ersten Anschluss des Messwiderstands verbunden ist, und dessen Ausgang mit der Referenzelektrode verbunden ist. Ferner ist wenigstens ein steuerbarer Schalter vorgesehen, der zwischen einer Messposition, in der in einem Messmodus die Messung des Messmediums erfolgt, und wenigstens einer Diagnoseposition, in der in einem Diagnosemodus die Diagnose der Messsonde erfolgt, umschaltbar ist. Im Diagnosemodus wird eine Prüfspannung über einen Lastwiderstand an die Hilfselektrode angelegt, um einen ersten Verlauf der Spannung an der Referenzelektrode und/oder einen ersten Verlauf der Spannung an der Hilfselektrode zu messen. Durch einen Vergleich des ersten Verlaufs der Spannung an der Referenzelektrode und/oder des ersten Verlaufs der Spannung an der Hilfselektrode und/oder der Differenz des ersten Verlaufs der Spannung an der Referenzelektrode und des ersten Verlaufs der Spannung an der Hilfselektrode mit Kennwerten oder Kennlinien und die Auswertung ermittelter Vergleichswerte wird erfindungsgemäss der Zustand der Referenzelektrode bestimmt.

Das beanspruchte Verfahren weist die folgenden Schritten auf: Anlegen einer Prüfspannung an der Hilfselektrode, trennen der Prüfspannung von der Hilfselektrode und simultane Messung des Verlaufs der Spannung an der Hilfselektrode in Funktion der Zeit; und des Verlaufs Referenzspannung an der Referenzelektrode in Funktion der Zeit, Subtraktion der beiden Spannungsverläufe und Speicherung der Spannungsdifferenz in Funktion der Zeit als Antwortsignal der Referenzelektrode, Auswertung des Antwortsignals, und Bestimmung des Zustands der Referenzelektrode aus dem Antwortsignal der Referenzelektrode.

Das erfindungsgemässe Verfahren dient der Messung der Ionenkonzentration in einem Messmedium und der Diagnose einer Messsonde nach Anspruch 1, die eine in das Messmedium eintauchbare Referenzelektrode, eine in das Messmedium eintauchbare Hilfselektrode und einen ISFET, dessen beschichtete Gate-Elektrode der Kontaktierung des Messmediums dient, umfasst, vorzugsweise mit einer Messschaltung nach Anspruch 2, die vorsieht, dass am Drain-Anschluss des ISFET ein erstes Potential einer konstanten ersten Spannungsquelle anliegt, der Source-Anschluss des ISFET an einem ersten Anschluss eines Messwiderstands anliegt, dessen zweiter Anschluss mit einem zweiten Potential der ersten Spannungsquelle verbunden ist. Vorgesehen ist ferner ein Operationsverstärker, an dessen nicht-invertierendem Eingang eine einstellbare Steuerspannung anliegt, dessen invertierender Eingang mit dem ersten Anschluss des Messwiderstands verbunden ist, und dessen Ausgang mit der Referenzelektrode verbunden ist. Ferner ist wenigstens ein steuerbarer Schalter, der zwischen einer Messposition, in der in einem Messmodus die Messung des Messmediums erfolgt, und wenigstens einer Diagnoseposition, in der in einem Diagnosemodus die Diagnose der Messsonde erfolgt, umschaltbar ist.

Erfindungsgemäss wird im Diagnosemodus bzw. während der in situ Diagnose eine Prüfspannung vorzugsweise über einen Lastwiderstand an die Hilfselektrode angelegt. Anschliessend wird ein erster Verlauf der Spannung an der Referenzelektrode und/oder ein erster Verlauf der Spannung an der Hilfselektrode gemessen. In der Folge wird der erste Verlauf der Spannung an der Referenzelektrode und/oder der erste Verlauf der Spannung an der Hilfselektrode oder die Differenz des ersten Verlaufs der Spannung an der Referenzelektrode und des ersten Verlaufs der Spannung an der Hilfselektrode mit Kennwerten oder Kennlinien verglichen und Vergleichswerte gebildet werden. Abschliessend werden die Vergleichswerte ausgewertet und der Zustand der Referenzelektrode bestimmt.

Vorzugsweise wird geprüft, ob die gemessenen Verläufe der Spannungen an der Referenzelektrode und/oder der Hilfselektrode oder der Verlauf des Differenzsignals innerhalb einer Toleranzzone liegen, oder ob die Verläufe vorbestimmte Schwellwerte nicht überschreiten. Alternativ kann die Auswertung des Antwortsignals und/oder der gemessenen Spannungsverläufe durch einen Vergleich mit Referenzverläufen erfolgen. Kennlinien und Kennwerte, wie Toleranzzone und Schwellwerte können z.B. durch Prüfung von Messsonden ermittelt werden, die über längere Zeit betrieben wurden.

Beim Verfahren zur in situ Diagnose der Referenzelektrode wird der ISFET-Source-und/oder Drain-Anschluss vorzugsweise vom Rest der Messschaltung getrennt werden, während eine konstante Prüfspannung an die Hilfselektrode angelegt wird.

Vorzugsweise wird die Prüfspannung über einen Lastwiderstand an die Hilfselektrode angelegt.

Die Prüfspannung U_{PT} kann vorteilhaft am invertierenden Eingang des Operationsverstärkers abgegriffen werden. Da die Spannungsdifferenz zwischen dem invertierenden und dem nicht-invertierenden Eingang des Operationsverstärkers praktisch null ist, entspricht die abgegriffene Prüfspannung der Steuerspannung, die am nicht-invertierenden Eingang anliegt. Da der ISFET-Source-Anschluss über den Messwiderstand mit einem Potenzial der Betriebsspannung verbunden ist, kann die Prüfspannung vorteilhaft auch an diesem ersten Anschluss des Messwiderstandes abgegriffen werden.

Vorzugsweise wird ein Spannungspuls mit einer ersten Polarität von einer ersten vordefinierten Amplitude und einer ersten vordefinierten Dauer an der Hilfselektrode angelegt.

Vorzugsweise wird ein erster Spannungspuls mit einer ersten Polarität von einer ersten vordefinierten Amplitude und einer ersten vordefinierten Dauer und darauf folgend ein zweiter Spannungspuls mit einer zweiten Polarität, die der ersten Polarität entgegengesetzt ist, einer zweiten vordefinierten Amplitude und einer zweiten vordefinierten Dauer an die Hilfselektrode angelegt.

Die erfindungsgemässe Messsonde, die erfindungsgemässe Messschaltung und das erfindungsgemässe Verfahren werden in den verschiedenen Ausgestaltungen nachstehend anhand von Zeichnungen näher erläutert. Es zeigen:
- Fig. 1: eine schematische Darstellung einer erfindungsgemässen Messsonde M mit einem ISFET T, einer Referenzelektrode RE und einer Hilfselektrode AUX, die mit einer erfindungsgemässen Messschaltung MC verbunden sind;
- Fig. 2: eine schematische Darstellung einer herkömmlichen Schaltung mit einem ISFET T zur Messung der Ionenkonzentration in einem Messmedium L;
- Fig. 3: eine schematische Darstellung einer erfindungsgemässen ISFET-Messsonde M, in die zusätzlich eine Hilfselektrode AUX integriert ist, sowie eine Messschaltung mit einem Operationsverstärker OA zur Messung der Ionenkonzentration in einem Messmedium und zur Bestimmung des Zustandes der Messsonde M anhand der integrierten Hilfselektrode AUX;
- Fig. 4: die Messsonde M und die Messschaltung von Fig. 3 wobei der Operationsverstärker OA alternativ zur Regelung des ISFET Source-Drain-Stromes oder als Galvanostat zur Generierung eines durch die Hilfselektrode fliessenden Diagnosestroms IREF, welcher einen messbaren, durch den Innenwiderstand RS der Referenzelektrode RE verursachten Spannungssprung bewirkt;
- Fig. 5: die Messsonde M und die Messschaltung von Fig. 3, wobei die Betriebsspannung zwischen dem ISFET Drain-Anschluss TD und der Hilfselektrode AUX umgeschaltet werden kann; und
- Fig. 6: die Messsonde M und die Messschaltung von Fig. 3, wobei der Hilfselektrode AUX entweder ein positives oder ein negatives Potential oder alternierend ein positives und ein negatives Potential der Betriebsspannung vorzugsweise über einen Serienwiderstand zuschaltbar ist.

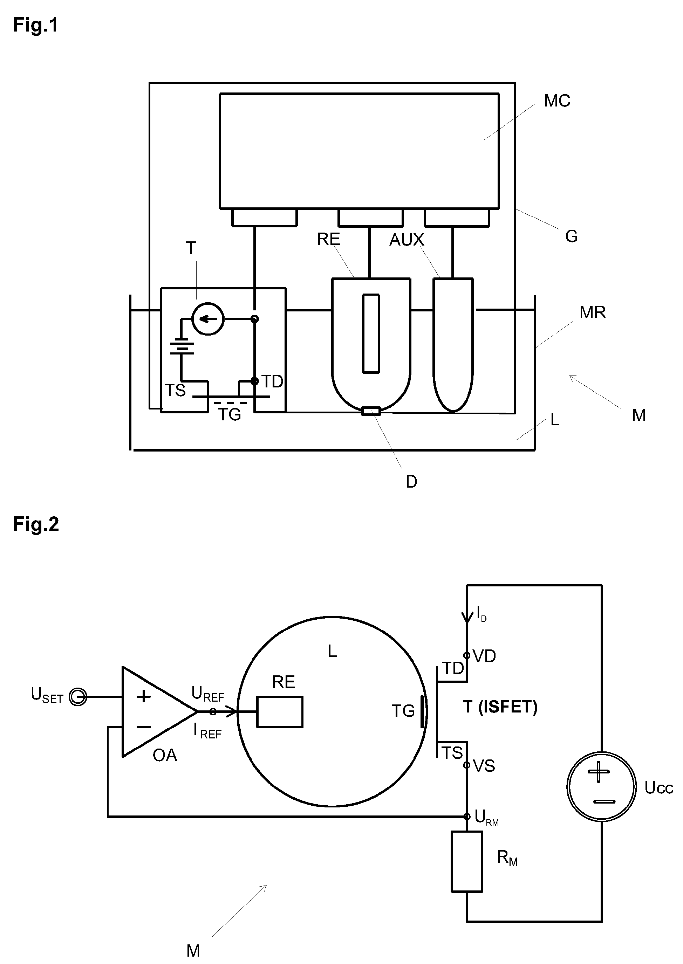

Fig. 1 zeigt eine schematische Darstellung einer erfindungsgemässen Messsonde M mit einem ISFET T, einer Referenzelektrode RE, einer Hilfselektrode AUX und einer erfindungsgemässen Messschaltung MC, die in einem Gehäuse G angeordnet sind. Die Messsonde M ist im Messbetrieb dargestellt. Der ISFET T, die Referenzelektrode RE und die Hilfselektrode AUX sind in eine Messlösung L eingetaucht, die sich in einem Messraum MR befindet, und sind mit der Messschaltung MC verbunden. Die Messschaltung MC erzeugt und verarbeitet elektrische Signale, um die Ionenkonzentration der Messlösung L und den Zustand der Messsonde M zu bestimmen. Die Referenzelektrode RE weist ein Diaphragma D auf, welches zur Erfassung des Potentials der Messlösung L vorgesehen ist und dessen Zustand in einem Diagnoseverfahren überwacht wird.

Fig. 2 zeigt eine schematische Darstellung einer herkömmlichen Schaltung zur Messung MC der Ionenkonzentration in einer Messlösung L anhand einer Messsonde M, die einen ISFET T und eine Referenzelektrode RE aufweist. Der ISFET-Drain Anschluss TD ist mit einem ersten Potential der konstanten Betriebsspannung Ucc verbunden. Der ISFET-Source-Anschluss TS ist mit einem Messwiderstand R_{M} verbunden, dessen zweiter Anschluss mit einem zweiten Potential der Betriebsspannung Ucc verbunden ist. Während des Messbetriebs fliesst somit ein Drain-Source-Strom I_{D} durch den ISFET und weiter durch den Messwiderstand R_{M} gegen das zweite Potential der Betriebsspannung Ucc. Das mit einer ionensensitiven Schicht beschichtete ISFET-Gate TG ist im Messbetrieb in direktem Kontakt mit dem Messmedium L, in das die Messsonde M eingetaucht ist. Z.B. besteht die ionensensitive Schicht aus Si₃N₄, Al₂O₃ oder Ta₂O₅.

Das Potential an der Referenzelektrode RE entspricht dem Potential des Messmediums L. Die Spannung der Referenzelektrode RE wird dabei in Bezug auf die negative Versorgungsspannung des Operationsverstärkers OA betrachtet. Die Betriebsspannung Ucc kann aus der Versorgungsspannung des Operationsverstärkers OA abgeleitet werden, z.B. über einen Serienwiderstand, da der Drain-Source-Strom I_{D} z.B. durch eine Regelschaltung konstant gehalten wird. Die Ionenkonzentration des am ISFET-Gate TG anliegenden Messmediums L beeinflusst die Raumladungszone und hat einen direkten Einfluss auf den Drain-Source-Strom I_{D} im ISFET T. Die Ionenkonzentration kann auf verschiedene Arten bestimmt werden. In der Schaltung von Fig. 2 wird die Spannung an der Referenzelektrode RE, d.h. die Referenzspannung U_{REF} mittels eines Operationsverstärkers OA derart geregelt, dass der Drain-Source-Strom I_{D} konstant bleibt.

Dazu wird an den nicht-invertierenden Eingang des Operationsverstärkers OA eine einstellbare Steuerspannung U_{SET} angelegt. Dem invertierenden Eingang des Operationsverstärkers OA wird eine Regelspannung U_{RM} zugeführt, die am ersten Anschluss des Messwiderstands R_{M} abgenommen wird. Der Ausgang des Operationsverstärkers OA, an dem die Referenzspannung U_{REF} anliegt, ist mit der Referenzelektrode RE verbunden. Die Referenzspannung U_{REF} ist somit einerseits von der Steuerspannung U_{SET} und andererseits von der am Messwiderstand R_{M} abgenommenen Regelspannung U_{RM} abhängig.

Die Steuerspannung U_{SET} wird vorzugsweise derart eingestellt, dass sich das Potential der Referenzspannung RE in der Messlösung L etwa in der Mitte der Versorgungsspannung des Operationsverstärkers OA bei einem neutralen pH Wert (pH=7) der Messlösung befindet. Damit wird eine optimale Aussteuerung für alkalische und säuerliche Lösungen gewährleistet. In der Folge wird die Steuerspannung U_{SET} konstant gehalten und kann mit einem Spannungsteiler aus der Versorgungsspannung des Operationsverstärkers OA oder aus der Betriebsspannung Ucc abgeleitet werden. Die Schaltungsanordnung in Fig.2 ist damit auf die wesentliche Funktionalität reduziert dargestellt.

Mit steigender Ionenkonzentration im Messmedium L erhöht sich der Drain-Source-Strom I_{D} im ISFET und somit die Spannung über dem Messwiderstand R_{M}, die als Regelspannung U_{RM} dem invertierenden Eingang des Operationsverstärkers OA zugeführt wird. Der Operationsverstärker OA reduziert dementsprechend die Referenzspannung U_{REF}.

Die Referenzspannung U_{REF} wird daher derart geregelt, dass der Spannungsabfall über den Messwiderstand R_{M} bzw. die Regelspannung U_{RM} und somit auch der Drain-Source-Strom I_{D} konstant gehalten werden. Die Referenzspannung U_{REF} ändert sich linear mit dem pH-Wert und ist somit ein Mass für die Ionenkonzentration im Messmedium L. Normalerweise ist der in das Messmedium L fliessende Referenzstrom I_{REF} gleich Null, solange das Gate TG vom ISFET isoliert und sehr hochohmig ist.

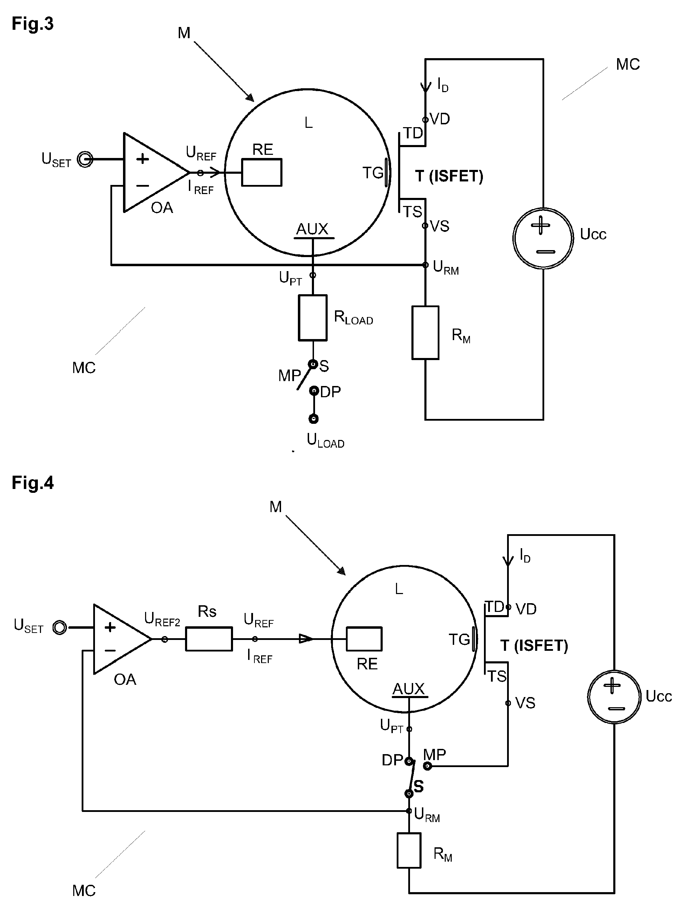

Fig. 3 zeigt eine schematische Darstellung einer erfindungsgemässen ISFET-Messsonde M in die eine Hilfselektrode AUX integriert ist, sowie eine erfindungsgemässe Messschaltung MC zur Messung der Ionenkonzentration in einem Messmedium L sowie zur Bestimmung des Zustandes der Messsonde M anhand der integrierten Hilfselektrode AUX. Die Messschaltung MC kann in einem Messmodus, in dem die Ionenkonzentration des Messmediums L gemessen wird, und in einem Diagnosemodus, in dem der Zustand der Messsonde M bestimmt wird, betrieben werden.

Die Schaltungsanordnung von Fig. 3 entspricht derjenigen von Fig. 2, ist zusätzlich jedoch mit einer Hilfselektrode AUX versehen, die im Diagnosemodus über einen Lastwiderstand R_{LOAD} und einen in Serie geschalteten Schalter S in Position DP mit einer Spannungsquelle U_{LOAD} verbindbar, die von einer externen Spannungsquelle geliefert wird. In dieser Position des Schalters S liegt somit die Prüfspannung U_{PT} an der Hilfselektrode AUX an. Im Messmodus ist der Schalter S geöffnet (Schalter in Position MP) und die Hilfselektrode AUX ist somit nicht belastet.

Im Diagnosemodus wird der Schalter S temporär geschlossen, sodass während eines entsprechenden Intervalls die Spannungsquelle U_{LOAD} über den Lastwiderstand R_{LOAD} mit der Hilfselektrode AUX verbunden wird. Somit wird ein Diagnose-Strompuls I_{REF} in die Hilfselektrode AUX eingeprägt. Daraus resultiert ein Strom innerhalb des Messmediums L zwischen der Hilfselektrode AUX und der Referenzelektrode RE. In der Folge kann der Spannungsverlauf an der Referenzelektrode RE und/oder der Spannungsverlauf an der Hilfselektrode AUX registriert und ausgewertet werden. Vorzugsweise wird die Differenz der beiden Spannungsverläufe ermittelt und ausgewertet. Durch Vergleich der Verläufe der einzelnen Spannungen oder den Verlauf des Differenzsignals mit Kennwerten oder Kennlinien, z.B. Referenzverläufen, Schwellwerten oder Schranken, kann der Zustand der Messsonde M bestimmt werden. Dabei wird z.B. geprüft, ob die gemessenen Spannungsverläufe innerhalb einer Toleranzzone liegen, oder ob resultierende Abweichungen von den Referenzverläufen einen Schwellwert überschreiten.

Fig. 4 zeigt eine Ausgestaltung der Messschaltung MC, bei der auf eine zusätzliche Spannungsquelle U_{LOAD} verzichtet wird. Stattdessen wird ein mehrpoliger Schalter oder Umschalter S verwendet, der einerseits mit dem ersten Anschluss des Messwiderstands R_{M} und dem invertierenden Eingang des Operationsverstärkers OA verbunden und anderseits entweder in Messposition MP mit dem Source-Anschluss TS des ISFETs oder in Diagnoseposition DP mit der Hilfselektrode AUX verbindbar ist. In der Diagnoseposition DP ist der Hilfselektrode AUX daher die am invertierenden Eingang des Operationsverstärkers OA anliegende Spannung zuführbar, die der Steuerspannung U_{SET} entspricht, die am nicht-invertierenden Eingang des Operationsverstärkers OA anliegt.

Als zweite konstante Spannungsquelle dient somit die Spannung am Anschluss zwischen dem Messwiderstand R_{M} und dem invertierenden Eingang des Operationsverstärkers OA. Durch Umstellung des Schalters S wird den ISFET-Source Anschluss TS gleichzeitig vom Rest der Schaltung getrennt, sodass der ISFET T während der Diagnose nicht belastet ist.

In der Messposition MP wird der Arbeitspunkt des ISFET, insbesondere der Drain-Strom und die Drain-Source-Spannung, mit der Steuerspannung U_{SET} und den Messwiderstand R_{M} definiert.

In der Diagnoseposition DP wird der Diagnosestrom I_{REF}, der in die Hilfselektrode AUX fliesst, durch die Steuerspannung U_{SET} und den Wert des Messwiderstandes R_{M} definiert, die vorzugsweise steuerbar sind. Der Diagnosestrom I_{REF} verursacht über den Innenwiderstand Rs der Referenzelektrode RE einen messbaren, zeitabhängigen Spannungssprung (U_{REF2} - U_{REF}), womit der Innenwiderstand Rs der Referenzelektrode RE bestimmbar ist.

Vorzugsweise werden die Steuerspannung U_{SET} und der Messwiderstand R_{M} derart programmiert, dass in der Messposition MP und in der Diagnose-Position DP der gewünschte ISFET-Arbeitspunkt eingestellt und der gewünschte Diagnosestrom I_{REF} in die Hilfselektrode AUX eingeprägt wird.

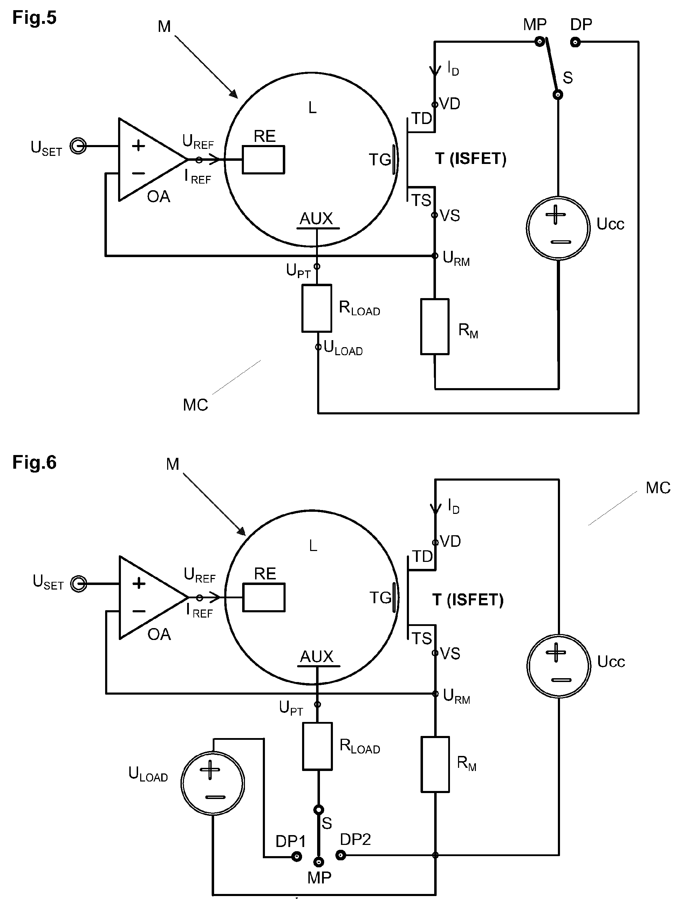

Fig. 5 zeigt eine weitere vorzugsweise Ausgestaltung der Messschaltung MC, bei der auf eine zusätzliche Spannungsquelle verzichtet und stattdessen die Betriebsspannung Ucc als zweite konstante Spannungsquelle verwendet wird. Der mehrpolige Schalter oder Umschalter S ist einerseits mit einem Potential der Betriebsspannung Ucc verbunden und anderseits entweder in der Messposition MP mit dem Drain-Anschluss TD des ISFET oder in der Diagnoseposition DP über den Lastwiderstand R_{LOAD} mit der Hilfselektrode AUX verbindbar. Auf diese Art ist in der Messposition MP des Schalters S die Hilfselektrode AUX vom Rest der Schaltung getrennt und in Diagnoseposition DP des Schalters S der Stromfluss durch den ISFET T unterbrochen und diese nicht belastet. Aus dem sprunghaften Zeitverlauf der Referenzspannung U_{REF} verursacht durch den eingeprägten Diagnosestrom I_{REF}, welcher durch die Hilfselektrode AUX fliesst und geregelt wird, kann der Wert des Innenwiderstands der Referenzelektrode RE bestimmt werden.

Fig. 6 zeigt eine Ausgestaltung der Messschaltung MC, bei welcher der mehrpolige Schalter S über den Lastwiderstand R_{LOAD} einerseits mit der Hilfselektrode AUX verbunden und andererseits zwischen drei Positionen, einer Messposition MP, einer ersten Diagnoseposition DP1 und einer zweiten Diagnoseposition DP2 umschaltbar ist. In der Messposition MP ist die Hilfselektrode AUX vom Rest der Schaltung getrennt. In der ersten Diagnoseposition DP1 ist die Hilfselektrode AUX mit einem ersten Potential einer zweiten, konstanten Spannungsquelle U_{LOAD} verbunden und in der zweiten Diagnoseposition DP2 ist die Hilfselektrode AUX mit dem zweiten Potential der zweiten Spannungsquelle U_{LOAD} verbunden. Die Prüfspannung U_{PT} kann daher zwischen zwei Potenzialen umgeschaltet werden.

Bei dieser Schaltung wird ein Diagnosestrom I_{REF} in die Hilfselektrode AUX eingeprägt ohne dass eine zusätzliche Spannungsquelle erforderlich ist. Um auf eine zusätzliche Spannungsquelle zu verzichten, wird ein mehrpoliger Schalter S verwendet, der einerseits mit einem positiven oder einem negativen Potential der zweiten Spannungsquelle verbindbar ist und anderseits in der Messposition MP von der Schaltung getrennt ist. Da der ISFET während der Diagnosephase nicht benötigt wird, kann die Betriebsspannung U_{CC} vorteilhaft zur Erzeugung der Prüfspannung U_{PT} bzw. der Spannung U_{LOAD} verwendet werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, z.B. indem die Merkmale der einzelnen Ausführungsbeispiele miteinander kombiniert und/oder einzelne Funktionseinheiten der Ausführungsbeispiele ausgetauscht werden. Insbesondere können alle hier beschriebenen Spannungen, die Versorgungsspannung des Operationsverstärkers OA, die Steuerspannung U_{SET}, die Betriebsspannung Ucc und die Spannungsquelle U_{LOAD} aus einer einzigen Referenzspannungsquelle mit Beihilfe von Spannungsteilern hergeleitet werden. Die Verwendung mehrerer Spannungsquellen ist jedoch ebenfalls möglich.

### Liste der Bezugszeichen

- M: Messsonde
- L: Messmedium
- MR: Messraum
- G: Gehäuse
- MC: Messschaltung
- T: ISFET
- TG: Beschichteter Gate-Anschluss
- TD: Drain-Anschluss
- TS: Source-Anschluss
- D: Diaphragma
- RE: Referenzelektrode
- AUX: Hilfselektrode
- OA: Operationsverstärker
- R_{M}: Messwiderstand am Source-Anschluss
- R_{LOAD}: Lastwiderstand an der Hilfselektrode AUX
- Rs: Innerer Widerstand der Referenzelektrode
- U_{CC}: Betriebsspannung am Drain-Anschluss des ISFET
- VS: Source-Potential
- VD: Drain-Potential
- ID: Drain-Source-Strom
- U_{SET}: Einstellbare Steuerspannung am Operationsverstärker
- U_{RM}: Regelspannung am Messwiderstand
- U_{REF}: Vorspannung oder Referenzspannung an der Referenzelektrode
- U_{PT}: Spannung an der Hilfselektrode AUX
- U_{LOAD}: Zweite konstante Spannungsquelle
- I_{REF}: Stromfluss durch die Referenzelektrode RE
- S: Schalter
- MP: Messposition
- DP: Diagnose-Position
- DP1: Erste Diagnose-Position
- DP2: Zweite Diagnose Position

## Patentansprüche

1. ISFET-Messsonde (M) mit einem Gehäuse (G), in dem ein ISFET (T) und eine Referenzelektrode (RE) derart angeordnet sind, dass die Gate-Elektrode (TG) des ISFET (T), die mit einer ionensensitiven Schicht beschichtet ist, und die Referenzelektrode (RE) in einen Messraum (MR) hineinragen, in den ein Messmedium (L) einführbar ist, **dadurch gekennzeichnet, dass** innerhalb des Gehäuses (G) zusätzlich eine Hilfselektrode (AUX) angeordnet und innerhalb des Messraums (MR) gehalten ist.

2. Messschaltung (MC) für eine ISFET-Messsonde (M) nach Anspruch 1 zur Messung der Ionenkonzentration in einem Messmedium (L) und zur Diagnose der Messsonde (M), die eine in das Messmedium (L) eintauchbare Referenzelektrode (RE) und eine in das Messmedium (L) eintauchbare Hilfselektrode (AUX), sowie
einen ISFET (T) umfasst,
dessen beschichtete Gate-Elektrode (TG) zur Kontaktierung des Messmediums (L) vorgesehen ist,
an dessen Drain-Anschluss (TD) ein erstes Potential einer konstanten ersten Spannungsquelle (U_{CC}) anliegt,
dessen Source-Anschluss (TS) an einem ersten Anschluss eines Messwiderstands (R_{M}) anliegt, dessen zweiter Anschluss mit einem zweitem Potential der ersten Spannungsquelle (Ucc) verbunden ist,
und mit einem Operationsverstärker (OA),
an dessen nicht-invertierendem Eingang eine einstellbare Steuerspannung (U_{SET}) anliegt, dessen invertierender Eingang mit dem ersten Anschluss des Messwiderstands (R_{M}) verbunden ist, und dessen Ausgang mit der Referenzelektrode (RE) verbunden ist,
**dadurch gekennzeichnet, dass**
wenigstens ein steuerbarer Schalter (S) vorgesehen ist, der zwischen einer Messposition (MP), in der die Messung des Messmediums (L) erfolgt, und wenigstens einer Diagnoseposition (DP), in der die Diagnose der Messsonde (M) erfolgt, umschaltbar ist.

3. Messschaltung (MC) nach Anspruch 2, **dadurch gekennzeichnet, dass** die Hilfselektrode (AUX) in der Diagnoseposition (DP) des steuerbaren Schalters (S) über einen Lastwiderstand (R_{LOAD}) und durch den steuerbaren Schalter (S) und mit einer konstanten Prüfspannung (U_{LOAD}; U_{SET}; Ucc) verbindbar ist, und dass die Hilfselektrode (AUX) in der Messposition (MP) durch den steuerbaren Schalter (S) von der Prüfspannung (U_{LOAD}; U_{SET}; Ucc) trennbar ist.

4. Messschaltung (MC) nach Anspruch 2 oder 3, **dadurch gekennzeichnet, dass** der steuerbare Schalter (S) mehrpolig ausgebildet ist und einerseits mit dem ersten Anschluss des Messwiderstands (R_{M}) und dem invertierenden Eingang des Operationsverstärkers (OA) verbunden und anderseits
in der Messposition (MP) mit dem Source-Anschluss (TS) des ISFET (T) und
in der Diagnoseposition (DP) mit der Hilfselektrode (AUX) verbindbar ist, welcher dadurch die am invertierenden Eingang des Operationsverstärker (OA) anliegende Spannung zuführbar ist, die zumindest annähernd der Steuerspannung (U_{SET}) entspricht, die am nichtinvertierenden Eingang des Operationsverstärkers (OA) anliegt.

5. Messschaltung nach Anspruch 2 oder 3, **dadurch gekennzeichnet, dass** der steuerbare Schalter (S) mehrpolig ausgebildet ist und einerseits mit dem ersten Potential der ersten Spannungsquelle (Ucc) und anderseits
in der Messposition (MP) mit dem Drain-Anschluss (TD) des ISFET (T) und
in der Diagnoseposition (DP) über den Lastwiderstand (R_{LOAD}) mit der Hilfselektrode (AUX) verbindbar ist.

6. Messschaltung nach Anspruch 3, **dadurch gekennzeichnet, dass**
die Hilfselektrode (AUX) mittels des steuerbaren Schalters (S) in der Diagnoseposition (DP) über den Lastwiderstand (R_{LOAD}) mit einer konstanten zweiten Spannungsquelle (U_{LOAD}) verbindbar ist, die eine Prüfspannung (U_{LOAD}) abgibt, und dass
die Hilfselektrode (AUX) mittels des steuerbaren Schalters (S) in der Messposition (MP) von der zweiten Spannungsquelle trennbar ist.

7. Messschaltung gemäss Anspruch 2 oder 3, **dadurch gekennzeichnet, dass** der steuerbare Schalter (S) zwischen der Messposition (MP) und wenigstens einer ersten und einer zweiten Diagnoseposition (DP1, DP2) umschaltbar ist, in denen wahlweise ein Potential der ersten oder zweiten Spannungsquelle ((U_{CC}; U_{LOAD}) oder die Überlagerung von Potentialen der ersten und zweiten Spannungsquelle ((U_{CC}; U_{LOAD}) direkt oder über den Lastwiderstand (R_{LOAD}) an die Hilfselektrode (AUX) übertragbar ist.

8. Messschaltung gemäss einem der Ansprüche 2 bis 7, **dadurch gekennzeichnet, dass** der steuerbare Schalter (S) ein steuerbarer Analogschalter, vorzugsweise ein CMOS-Transistor ist.

9. Verfahren zur Messung der Ionenkonzentration in einem Messmedium und zur Diagnose einer Messsonde (M) nach Anspruch 1, die
eine in das Messmedium eintauchbare Referenzelektrode (RE), eine in das Messmedium (L) eintauchbare Hilfselektrode (AUX) und
einen ISFET (T) umfasst,
dessen beschichtete Gate-Elektrode (TG) zur Kontaktierung des Messmediums (L) vorgesehen ist,
an dessen Drain-Anschluss (TD) ein erstes Potential einer konstanten ersten Spannungsquelle (U_{CC}) anliegt,
dessen Source-Anschluss (TS) an einem ersten Anschluss eines Messwiderstands (R_{M}) anliegt, dessen zweiter Anschluss mit einem zweiten Potential der ersten Spannungsquelle (Ucc) verbunden ist,
mit einem Operationsverstärker (OA),
an dessen nicht-invertierendem Eingang eine einstellbare Steuerspannung (U_{SET}) anliegt, dessen invertierender Eingang mit dem ersten Anschluss des Messwiderstands (R_{M}) verbunden ist, und dessen Ausgang mit der Referenzelektrode (RE) verbunden ist, und mit wenigstens einem steuerbaren Schalter (S), der zwischen einer Messposition (MP), in der in einem Messmodus die Messung des Messmediums (L) erfolgt, und wenigstens einer Diagnoseposition (DP), in der in einem Diagnosemodus die Diagnose der Messsonde (M) erfolgt, umschaltbar ist,
**dadurch gekennzeichnet, dass** im Diagnosemodus:
- eine Prüfspannung (U_{LOAD}; U_{SET}; Ucc) über einen Lastwiderstand (R_{LOAD}) an die Hilfselektrode (AUX) angelegt wird;
- ein erster Verlauf der Spannung (U_{REF}) an der Referenzelektrode (RE) und/oder ein erster Verlauf der Spannung (U_{PT}) an der Hilfselektrode (AUX) gemessen wird,
- der erste Verlauf der Spannung (U_{REF}) an der Referenzelektrode (RE) und/oder der erste Verlauf der Spannung (U_{PT}) an der Hilfselektrode (AUX) oder die Differenz des ersten Verlaufs der Spannung (U_{REF}) an der Referenzelektrode (RE) und des ersten Verlaufs der Spannung (U_{PT}) an der Hilfselektrode (AUX) mit Kennwerten oder Kennlinien verglichen wird und Vergleichswerte gebildet werden; und
- die ermittelten Vergleichswerte ausgewertet werden und der Zustand der Referenzelektrode (RE) bestimmt wird.

10. Verfahren nach Anspruch 9, **dadurch gekennzeichnet, dass** im Diagnosemodus
- eine Prüfspannung (U_{LOAD}; U_{SET}; Ucc) über einen Lastwiderstand (R_{LOAD}) an die Hilfselektrode (AUX) angelegt wird;
- der erste Verlauf der Spannung (U_{REF}) an der Referenzelektrode (RE) und/oder der erste Verlauf der Spannung (U_{PT}) an der Hilfselektrode (AUX) gemessen wird,
- die Prüfspannung (U_{LOAD}; U_{SET}; Ucc) von der Hilfselektrode (AUX) getrennt wird;
- ein zweiter Verlauf der Spannung (U_{REF}) an der Referenzelektrode (RE) und/oder ein zweiter Verlauf der Spannung (U_{PT}) an der Hilfselektrode (AUX) gemessen wird,
- der erste Verlauf der Spannung (U_{REF}) an der Referenzelektrode (RE) und/oder der erste Verlauf der Spannung (U_{PT}) an der Hilfselektrode (AUX) oder die Differenz des ersten Verlaufs der Spannung (U_{REF}) an der Referenzelektrode (RE) und des ersten Verlaufs der Spannung (U_{PT}) an der Hilfselektrode (AUX) mit Kennwerten oder Kennlinien verglichen wird und Vergleichswerte gebildet werden;
- der zweite Verlauf der Spannung (U_{REF}) an der Referenzelektrode (RE) und/oder der zweite Verlauf der Spannung (U_{PT}) an der Hilfselektrode (AUX) oder die Differenz des zweiten Verlaufs der Spannung (U_{REF}) an der Referenzelektrode (RE) und des zweiten Verlaufs der Spannung (U_{PT}) an der Hilfselektrode (AUX) mit Kennwerten oder Kennlinien verglichen wird und Vergleichswerte gebildet werden;
- die ermittelten Vergleichswerte ausgewertet und der Zustand der Referenzelektrode (RE) bestimmt wird.

11. Verfahren nach Anspruch 9 oder 10, **dadurch gekennzeichnet, dass** der steuerbare Schalter (S) derart ausgestaltet ist und betätigt wird, dass der ISFET-Source-Anschluss (TS) oder der ISFET-Drain-Anschluss (TD) bei der Umschaltung in den Diagnosemodus von der ersten Spannungsquelle (Ucc) getrennt wird.

12. Verfahren nach Anspruch 9, 10 oder 11, **dadurch gekennzeichnet, dass** der steuerbare Schalter (S) derart ausgestaltet ist und betätigt wird, dass bei der Umschaltung in den Diagnosemodus
- die Hilfselektrode (AUX) gegebenenfalls über den Lastwiderstand (R_{LOAD}) mit dem ersten Anschluss des Messwiderstandes (R_{M}) und dem invertierenden Eingang des Operationsverstärkers (OA) verbunden wird, wodurch die am invertierenden Eingang des Operationsverstärkers (OA) anliegende Spannung, die der Steuerspannung (U_{SET}) entspricht, als Prüfspannung (U_{SET}) verwendet wird; oder
- die Hilfselektrode (AUX) über den Lastwiderstand (R_{LOAD}) mit einer zweiten Spannungsquelle (U_{LOAD}) verbunden wird, welche die Prüfspannung (U_{LOAD}) liefert; oder
- die Hilfselektrode (AUX) über den Lastwiderstand (R_{LOAD}) mit einem der Potentiale der ersten Spannungsquelle (Ucc) verbunden wird, welches als Prüfspannung (Ucc) dient.

13. Verfahren nach einem der Ansprüche 9 - 12, **dadurch gekennzeichnet, dass** die im Diagnosemodus über einen Lastwiderstand (R_{LOAD}) an die Hilfselektrode (AUX) angelegte Prüfspannung (U_{LOAD}; U_{SET}; Ucc) einmal oder mehrmals zwischen zwei Spannungswerten, vorzugsweise zwischen einem positiven und einem negativem Spannungswert umgeschaltet wird.

14. Verfahren nach einem der Ansprüche 9 - 13, **dadurch gekennzeichnet, dass** die im Diagnosemodus über einen Lastwiderstand (R_{LOAD}) an die Hilfselektrode (AUX) angelegte Prüfspannung (U_{LOAD}; U_{SET}; Ucc) einen ersten Spannungspuls mit einer ersten Polarität von einer ersten vordefinierten Amplitude und einer ersten vordefinierten Dauer bewirkt.

15. Verfahren nach einem der Ansprüche 9 - 14, **dadurch gekennzeichnet, dass** die über einen Lastwiderstand (R_{LOAD}) an die Hilfselektrode (AUX) angelegte Prüfspannung (U_{LOAD}; U_{SET}; Ucc) in einem ersten Diagnosemodus (DP1) und einem daran anschliessenden zweiten Diagnosemodus (DP2) derart gewählt wird, dass im ersten Diagnosemodus (DP1) ein erster Spannungspuls mit einer ersten Polarität von einer vordefinierten ersten Amplitude und einer ersten vordefinierten Dauer an die Hilfselektrode (AUX) angelegt wird und dass im zweiten Diagnosemodus (DP2) ein zweiter Spannungspuls mit einer zweiten Polarität, die der ersten Polarität entgegengesetzt ist, von einer zweiten vordefinierten Amplitude und einer zweiten vordefinierten Dauer an die Hilfselektrode (AUX) angelegt wird.
